# EUROPEAN PATENT SPECIFICATION

(11) **EP 2 143 919 B1**
(45) Date of publication and mention of the grant of the patent: **26.11.2014**
(21) Application number: 08160276.5
(22) Date of filing: 11.07.2008
(51) Int. Cl.: F02D 41/02

(54) **Particulate filter regeneration system**
Regenerationssystem für Partikelfilter
Système de régénération de filtre à particules

(43) Date of publication of application: 13.01.2010
(73) Proprietor: Perkins Engines Company Limited, Eastfield Peterborough PE1 5NA (GB)
(72) Inventor: Farman, Alistair C., Peterborough PE1 5NA (GB); Carlill, Tom W., Peterborough PE1 5NA (GB); Soilleux, Jason L., Peterborough PE1 5NA (GB); Reed, James J., Peterborough PE1 5NA (GB)
(74) Representative: Hatzmann, Martin

(56) References cited:
- EP-A1- 1 270 884
- WO-A-2006/041545
- DE-A1- 10 352 662
- US-A1- 2005 086 933

## Description

### Technical Field

The disclosure relates to a particulate filter regeneration system and, more particularly, to a regeneration system for a system with a diesel particulate filter and an oxidation catalyst.

### Background

Engines, including diesel engines, gasoline engines, natural gas engines, and other engines known in the art, may exhaust a complex mixture of air pollutants. The air pollutants may be composed of both gaseous and solid material, such as, for example, particulate matter. Particulate matter may include ash and unburned carbon particles and may sometimes be referred to as soot.

Due to increased environmental concerns, exhaust emission standards have become more stringent. The amount of particulate matter and gaseous pollutants emitted from an engine may be regulated depending on the type, size, and/or class of engine. In order to meet these emissions standards, engine manufacturers have pursued improvements in several different engine technologies, such as fuel injection, engine management, and air induction, to name a few. In addition, engine manufacturers have developed devices for treatment of engine exhaust after it leaves the engine.

Engine manufacturers have employed exhaust treatment devices called particulate filters or particulate traps to remove the particulate matter from the exhaust flow of an engine. A particulate trap may include a filter designed to trap particulate matter. The use of the particulate filter for extended periods of time, however, may enable particulate matter to accumulate on the filter, thereby causing damage to the filter and/or a decline in engine performance.

One method of restoring the performance of a particulate trap may include regeneration. Regeneration of a particulate trap filter system may be accomplished by thermal regeneration, which may include increasing the temperature of the filter and the trapped particulate matter above the combustion temperature of the.particulate matter, thereby burning away the collected particulate matter and regenerating the filter system. This increase in temperature may be effectuated by various means. For example, some systems employ a heating element (e.g., an electric heating element) to directly heat one or more portions of the particulate trap (e.g., the filter material or the external housing). Other systems have been configured to heat the exhaust gases upstream from the particulate trap, allowing the flow of the heated gases through the particulate trap to transfer heat to the particulate trap. This can be done actively by heating the exhaust gases upstream from the particulate trap with the use of a burner that creates a flame within the exhaust conduit leading to the particulate trap. Such regeneration may be indicated as active regeneration. Alternatively or additionally, some systems may alter one or more engine operating parameters, such as air/fuel mixture, to produce exhaust gases with an elevated temperature. Running an engine with a "rich" air/fuel mixture can elevate exhaust gas temperature. Such regeneration may be indicated as passive regeneration. An example of passive regeneration is described in DE-102005012525A1. DE 103 52 662 A1 describes a combination of passive and active regeneration. DE 103 52 662 A1 describes an internal combustion engine assembly having an electronic controller and an exhaust system including an oxidation catalyst and a particulate filter. In system disclosed in this publication between time intervals active regeneration is effected. The duration of the time interval is not fixed but depends on the duration of the passive regeneration that took place during normal use cycle of the assembly. If, during the normal use cycle, passive regeneration has occurred for a larger amount of time, the time interval between successive active regeneration is adjusted in that it is increased. The active regeneration includes two phases. In the first phase the electronic controller is configured to control a bypass valve of the turbocharger, an EGR-valve, an intake throttle valve and to delay the injection timing and to decrease the injection pressure. These actions lead to an increase of the exhaust gas temperature and consequently to a heating of the oxidation catalyst up to an activation temperature. Subsequently, in a second phase of the active regeneration, fuel is injected in the exhaust gas via the fuel injectors. Another example of passive regeneration is described in EP 1 270 884 A1. In that publication, the dynamic pressure on the particulate filter is increased so that the filter temperature rises. The increase of the dynamic pressure may be obtained by advancing or retarding the opening timing of the combustion chamber exhaust valves. Another method is to inject an additional amount of fuel in the combustion chamber during the expansion stroke of the internal combustion engine. Yet another proposal is to increase the boost pressure of the turbocharger so that the amount of air introduced into the combustion chamber increases and the amount of exhaust gas correspondingly increases. As a result, the dynamic pressure on the heat-resistant filter can be increased.

It is known to initiate regeneration in response to measurements of the amount of particulate matter accumulated in the particulate trap. An example of such a system is disclosed in US2007/0022746. US2007/0022746 is focused on the detection of particulate matter in the particulate trap filter by means of a radio frequency sensor.

The known systems may interrupt the normal operating cycle of the internal combustion engine for regeneration and/or consume fuel for regeneration of the particulate filter.

The present disclosure is directed, at least in part, to improving or overcoming some aspects of prior particulate filter regeneration systems.

### Summary of the Invention

In one aspect an internal combustion engine assembly is provided in accordance with claim 1. The internal combustion engine assembly includes an exhaust system with an oxidation catalyst and a particulate filter. The internal combustion engine assembly includes an electronic controller that is configured to control at least one of an engine load influencing parameter and an engine speed influencing parameter to bring a temperature of exhaust gas above a limit temperature that is so high that the exhaust gas contains NO₂ up to such a concentration that regeneration of the particulate filter takes place. The exhaust system includes a back pressure valve. The at least one of an engine load influencing parameter and engine speed influencing parameter at least includes the load influencing parameter of the position of the back pressure valve. The position of the back pressure valve is controlled so that the temperature of the exhaust gas exceeds the limit temperature and regeneration of the particulate filter is obtained during a normal work cycle of the engine, i.e. without interrupting the work cycle of the engine.

In another aspect a method is provided in accordance with claim 16. The method for controlling an internal combustion engine assembly having an exhaust system with an oxidation catalyst, a particulate filter and a back pressure valve includes controlling at least one of an engine load influencing parameter and an engine speed influencing parameter to bring a temperature of exhaust gas above a limit temperature that is so high that the exhaust gas contains NO₂ up to such a concentration that regeneration of the particulate filter takes place, wherein the at least one of an engine load influencing parameter and engine speed influencing parameter at least includes the load influencing parameter of the position of the back pressure valve. The position of the back pressure valve is controlled so that the temperature of the exhaust gas exceeds the limit temperature and regeneration of the particulate filter is obtained during a normal work cycle of the engine, i.e. without interrupting the work cycle of the engine.

### Brief Description of the Drawings

Fig. 1 is a schematic overview of a internal combustion engine with an exhaust gas after-treatment system; and
Fig. 2 is a diagram showing an example of a load speed map.

### Detailed Description

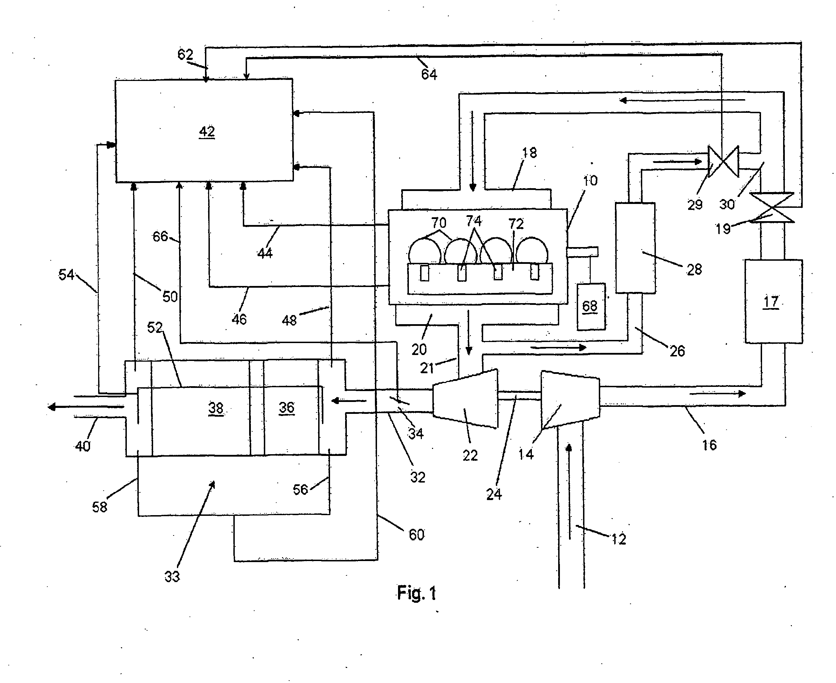

In one aspect, the disclosure relates to an internal combustion engine assembly for driving a load. A schematic overview of an internal combustion engine assembly is shown in Fig. 1. The internal combustion engine assembly includes an internal combustion engine 10, an air intake system and an exhaust system. The internal combustion engine may have combustion chambers 70 and associated pistons. Each combustion chamber 70 may have an associated fuel injector 74 for injecting fuel in the combustion chamber. The at least one fuel injector 74 may be included in a fuel supply system 72 that may also include a fuel pump, a fuel tank and fuel lines. Each combustion chamber may also have at least one air intake port with an associated intake port valve and at least one exhaust port with an associated exhaust port valve. Engine 10 may be any kind of engine that produces a flow of exhaust gases. For example, engine 10 may be an internal combustion engine, such as a gasoline engine, a diesel engine, a gaseous fuel burning engine or any other exhaust gas producing engine. Instead of fuel injectors 74 also other means may be present for supplying fuel to the combustion chambers 70. For example, fuel may be introduced into the intake air upstream from the at least one intake port of the at least one combustion chamber 70.

The air intake system may include in air intake passage 12 that may be connected to a compressor 14. An outlet of the compressor 14 may be connected via air intake passage 16 to an intake manifold 18 of the internal combustion engine 10. The air intake passage 16 may include an after cooler 17. Other components may also form part of the air intake system. An example may be a intake throttle valve 19 for regulating the amount of intake air that may be supplied to the internal combustion engine 10.

The exhaust system may include an exhaust manifold 20 that may be connected via an exhaust passage 21 to a turbine 22. The turbine 22 may have a shaft 24 that may be connected to the compressor 14 for driving the compressor 14. An exhaust gas recirculation passage 26 may have an inlet that may be connected to the exhaust manifold 22 or to the exhaust passage 21 connecting the exhaust manifold 20 to the turbine 22. An outlet 30 of the exhaust gas recirculation passage 26 may be in fluid communication with the inlet system. The exhaust gas recirculation passage 26 may include an EGR-cooler 28. The EGR-passage 26 may also include a non-return valve assembly that may prevent that intake air flows to the exhaust system. The EGR-passage 26 may also include an EGR-valve 29 for controlling the amount of exhaust gas that is introduced into the air intake system.

An exhaust outlet of the turbine 22 may be connected to an exhaust passage 32. The exhaust system may also include backpressure valve 34 downstream of the turbine. The exhaust passage 32 may emanate in an after-treatment assembly 33. The after-treatment assembly 33 may include an oxidation catalyst 36 and a particulate filter 38. In the oxidation catalyst 36 NO may be converted into NO₂ as exhaust gas passes over the oxidation catalyst 36. In the particulate filter the NO₂ is brought into contact with C, a main constituent of particulate matter or soot, leading to conversion of these substances into CO₂ + NO. Thus, particulate matter or soot may be regenerated at lower temperatures than without an oxidation catalyst 36. For example, in one embodiment the oxidation catalyst 36 regeneration may occur at any temperature above approximately 260°C.

The particulate filter 38 may be configured to remove one or more types of particulate matter from the exhaust gases produced by engine 10. Particulate filter 38 may include an outer housing, which may encase a filter medium (e.g., a metal mesh or screen, or a porous ceramic material, such as cordierite) configured to remove (i.e., trap) one or more types of particulate matter from the exhaust flow of engine 10. The after-treatment assembly 33 may include multifunctional devices such as a combination of an oxidation catalyst 36 and a particulate filter 38 in the same unit or a catalytic particulate filter, wherein filter medium may include a catalytic material and/or a catalytic coating.

A downstream end of the after-treatment assembly 33 may be connected to an exhaust passage 40 that may emanate into the environment. The exhaust passage 40 may include further components including a muffler.

An electronic controller 42 may be present. Such an electronic controller may be connected to signal lines that may transmit information received from sensors that are present in the system. The embodiment of Fig. 1 shows a number of signal lines including signal line 44 that may transmit a speed signal that is indicative of engine speed. Signal line 46 may transmit a load signal that is indicative of the load of the engine 10. The load signal may in an embodiment, for example be a torque signal or a signal relating to the amount of fuel that is consumed at a certain moment. Signal line 48 may transmit an entrance temperature signal that is indicative of the temperature on the upstream side of the oxidation catalyst 36. Signal line 50 may transmit an exit temperature signal that is indicative of the temperature on the downstream side of the particulate filter 38. The after-treatment assembly 33 may include a soot loading sensor 52. Signal line 54 may transmit soot loading signals from the soot loading sensor 52 that may be indicative of the soot loading in the particulate filter 38. For example, signal line 56 may transmit an entrance pressure that is indicative of the pressure at the upstream side of the oxidation catalyst 36. Signal line 58 may transmit an exit pressure that may be indicative of the pressure at the downstream side of the particulate filter 38. Signal line 60 may transmit a pressure difference signal that is indicative of the pressure difference between the upstream side and the downstream side of the after-treatment system. Signal line 62 may transmit a intake throttle valve signal that may be indicative of the position of the intake throttle valve. Signal line 64 may transmit a EGR-valve signal that may be indicative of the position of the EGR-valve. Signal line 66 may transmit a backpressure valve signal that is indicative of the position of the backpressure valve 34. The signal lines may be real signal lines that transmit electric, hydraulic or pneumatic signals for example. The signal lines may also or alternatively be wireless signal lines.

The electronic controller 42 may also transmit control signals to the various components of the internal combustion engine assembly. Signals that may be transmitted may, for example, include signals to control fuel injectors for injecting fuel in the combustion chambers 70, signals for controlling the position of the intake throttle valve 19, signals for controlling the position of the EGR-valve 29, signals for controlling the position of the backpressure valve 34, and/or signals for opening or closing inlet port valves and outlet port valves from combustion chambers 70 of the internal combustion engine.

For regeneration, the temperature of after-treatment assembly 33 may be increased by heat transferred to it from the exhaust gases flowing through it. The electronic controller 42 may be configured to control at least one of an engine load influencing parameter and an engine speed influencing parameter to bring a temperature of exhaust gas above a limit temperature that is so high that the exhaust gas contains NO₂ up to such a concentration that regeneration of the particulate filter 38 takes place. The limit temperature may also be indicated as balance point temperature. By controlling at least one of an engine load influencing parameter and an engine speed influencing parameter, regeneration of the particulate filter 38 may be obtained during a normal work cycle of the engine 10, i.e. without interrupting the work cycle of the engine 10. This may result in regeneration of the particulate filter 38 even when the normal work cycle of the engine 10 would result in exhaust gas temperatures that are below the limit temperature. In such circumstances the electronic controller 42 may be configured to take corrective measures by controlling at least one of an engine load influencing parameter and an engine speed influencing parameter so that the temperature of the exhaust gas may exceed the limit temperature.

It is contemplated that the controller 42 may be configured to control the position of the back pressure valve and use that position as the load influencing parameter for bringing the temperature of exhaust gas above a limit temperature that is so high that the exhaust gas contains NO2 up to such a concentration that regeneration of the particulate filter 38 takes place.

In an embodiment that may include a turbocharger having a turbine 22 that is included in the exhaust system, the back pressure valve 34 may be downstream of the turbine 22 and upstream of the oxidation catalyst 36 and the particulate filter 38. In an alternative embodiment, the backpressure valve 34 may be downstream of the after-treatment assembly 33.

The speed influencing parameter may in an embodiment be the amount of fuel that may be supplied to the engine 10 or the timing of supplying fuel to the at least one combustion chamber 70. When the amount of fuel that may be supplied is increased, in general, more power may become available and the operating condition of the engine 10 may be moved so that regeneration may resume. Other speed influencing parameters that may be contemplated include, for example, the position of a waste gate valve that may by pass exhaust gas along the turbine 22, the position of the EGR-valve 29 and the position of the intake throttle valve 19.

It is contemplated that the controller 42 may be configured to responsively control at least one of an engine load influencing parameter and an engine speed influencing parameter to bring a temperature of exhaust gas above a limit temperature that is so high that the exhaust gas contains NO2 up to such a concentration that regeneration of the particulate filter 38 takes place. To that end, the controller 42 may be configured to base the controlling at least in part on a soot loading parameter of the particulate filter 38 having a value that is above a soot loading margin value. When the soot loading parameter is below the soot loading margin value, the control may be configured to not actively control at least one of an engine load influencing parameter and an engine speed influencing parameter to bring a temperature of exhaust gas above a limit temperature that is so high that the exhaust gas contains NO₂ up to such a concentration that regeneration of the particulate filter takes place. The soot loading parameter may be obtained directly from the soot loading sensor 52 that may be provided in the after-treatment assembly 33. The soot loading sensor 52 may be connected to the electronic controller 42 by a signal line 54. The signal line 54 may also or alternatively be a wireless signal line. The signal obtained by the soot loading sensor 52 may be transmitted over signal line 54 to the controller 42. The electronic controller 42 may be configured to determine a soot loading parameter from the signal and to control the at least one of an engine load influencing parameter and an engine speed influencing parameter to bring the exhaust gas temperature above the limit temperature when the soot loading parameter has a value that is above a soot loading margin value.

In one embodiment, the soot loading parameter may also be determined indirectly. For example, on the basis of pressures of the exhaust gas. To that end an entrance pressure sensor may be provided that may provide a signal of signal line 56 that may be indicative of the pressure near the entrance of the after-treatment assembly 33. Also an exit pressure sensor may be provided that may provide a signal over signal line 58 that may be indicative of the pressure near the exit of the after-treatment assembly 33. Alternatively or additionally a pressure difference sensor may be provided that may provide a signal over signal line 60 that may be indicative of a pressure difference between the entrance and the exit pressure over the after-treatment assembly 33. Other signals may also be used for indirectly determining a soot loading parameter. Those signals may include exhaust gas temperature signals, back pressure valve position signals, intake throttle valve position signals, EGR-valve position signals, signals obtained from the fuel supply system 72, load signals and speed signals of the engine and the like.

The electronic controller 42 may be configured to bring the exhaust gas temperature above the limit temperature only when the soot loading parameter has a value that is above a soot loading margin value.

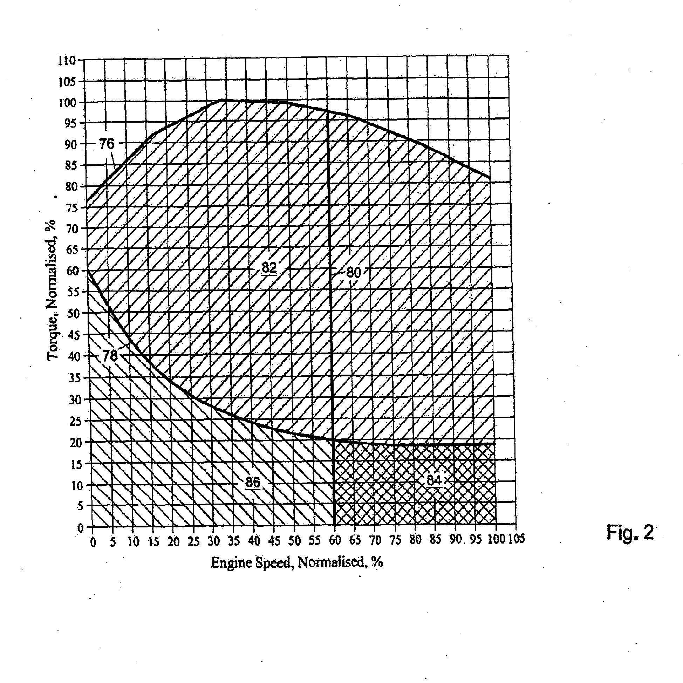

The controller 42 may be responsive to a speed torque model, such as a model including a speed torque map, to select speed and torque combinations that result in an exhaust gas temperature above the exhaust gas limit temperature. The controller 42 may be configured to select a speed and torque combination that provides an exhaust gas temperature above the exhaust gas limit temperature. The speed torque model may be based on formulas, stored historic data, or otherwise empirically determined data and/or a combination thereof. In one embodiment, the speed torque model may include a speed torque map including optimal speed and torque ranges corresponding to speed and torque combinations that provide exhaust gas temperatures above the limit temperature and non-optimal speed and torque ranges corresponding to speed and torque combinations that provide exhaust gas temperatures below the limit temperature. An example of such a map is shown in Fig. 2. The horizontal axis is a normalized speed scale. 100% is indicative for the maximum rotational speed of the internal combustion engine 10. The vertical axis is a normalized torque scale. 100% is indicative for the maximum torque of the internal combustion engine 10. A normalized maximum torque curve 76 may indicate the maximum torque that the engine 10 is able to produce for the various engine speeds. The engine 10 may also operate at conditions below this curve, i.e. at more moderate loads. The lower the load or torque, the lower the temperature of the exhaust gas may become. When diminishing the load or torque, the temperature of the exhaust gas may become so low that the concentration of NO₂ is not high enough for regeneration of the particulate filter 38. The combination of speed and torque at which that occurs may be indicated as the thermal management boundary and may be related to the limit temperature of the exhaust gas. The thermal management boundary may in one embodiment be associated with an exhaust gas temperature range of approximately 260-270 °C. For the various engine speeds the associated torque in the thermal management boundary may differ. This may lead to thermal management boundary curve 78. The thermal management boundary curve 78 may delimit two ranges. Above the thermal management boundary curve 78, the temperature of the exhaust gas may be above a limit temperature and is so high that the exhaust gas contains NO₂ up to such a concentration that regeneration of the particulate filter may take place. Below the thermal management boundary curve 78 no or too little regeneration may take place and corrective measures may have to be taken to effect regeneration of the particulate filter 38. The speed torque map may be divided into further ranges. Each range may be associated with different corrective measures. In the example shown in Fig. 2 a vertical margin line 80 may separate the speed torque map in two ranges in which different corrective measures may be taken for increasing the exhaust gas temperature.

One of the engine load influencing parameters and the engine speed influencing parameters to bring a temperature of exhaust gas above a limit temperature that is so high that the exhaust gas contains NO₂ up to such a concentration that regeneration of the particulate filter takes place may be a use of auxiliary equipment 68. To that end, the controller 42 may be configured to increase the use of the auxiliary equipment 68 to increase the load. Thus the operating condition of the engine 10 may move upwardly in the speed torque map to a point above the thermal management boundary curve 70. Consequently, the temperature of the exhaust gas may become so high that the exhaust gas contains NO2 up to such a concentration that regeneration of the particulate filter 38 may take place.

Auxiliary equipment 68 that may be controlled by the controller 42 for increasing the load may be chosen from a group including: a water pump, an air conditioner, a hydraulic pump, an electric generator, a fan, a heating system, a compressor, and lights. Of course, other auxiliary equipment may be used also for increasing the load of the engine 10 in order to obtain regeneration of the particulate filter 38.

In an embodiment the controller 42 may include a soot loading control function that may be configured to control a soot loading parameter value in the particulate filter 38 responsive to at least one input signal. The controller 42 may be configured to control at least one of the load influencing parameters and speed influencing parameters when the at least one input signal is indicative that the soot loading level, within a certain time limit, is likely to trend toward and above a soot loading margin value. An input signal for the controller 42 for predicting the future soot loading parameter value may be an input signal that is indicative of a parameter chosen from the group including, for example, engine speed, engine torque, exhaust gas temperature, exhaust gas entrance pressure at the after-treatment assembly 33, exhaust gas exit pressure at the after-treatment assembly 33 and/or pressure difference over the after-treatment assembly 33. Based on one input signal or a combination of these input signals the controller 42 may be configured to determine the moment at which corrective measures for obtaining regeneration may be taken.

In one embodiment the electronic controller 42 may have a memory containing at least one minimum temperature profile parameter value that may be indicative of an acceptable minimum temperature profile history over a first time period. The electronic controller 42 may be configured to determine at least one actual temperature profile parameter value that may be indicative of an actual exhaust temperature profile history over a second time period. The electronic controller 42 may also be configured to compare the at least one minimum temperature profile parameter value with the at least one actual profile parameter value and responsively produce a regeneration signal to control at least one of an engine load influencing parameter and an engine speed influencing parameter to bring a temperature of exhaust gas above a limit temperature that is so high that the exhaust gas contains NO₂ up to such a concentration that regeneration of the particulate filter takes place. For example, the regeneration signal may effect that controlling of at least one of an engine load influencing parameter and an engine speed influencing parameter takes place only when the regeneration signal indicates that regeneration is necessary. In one embodiment, the controller 42 may be configured to determine the at least one minimum temperature profile parameter value that is indicative of minimum acceptable temperature profile history as a function of at least one of an ambient pressure, an ambient temperature and a humidity. That is, the actual ambient pressure, actual ambient temperature and actual humidity during the second time period may have an impact on the value of the minimum temperature profile parameter value. The controller may include a function that takes into account the actual ambient pressure, temperature and humidity when determining the at least one minimum temperature profile parameter value.

In an embodiment, the controller may be configured to control at least one of an engine load influencing parameter and an engine speed influencing parameter to bring a temperature of exhaust gas just above a limit temperature that is so high that the exhaust gas contains NO₂ up to such a concentration that regeneration of the particulate filter takes place.

In one embodiment the controller 42 may be configured to control at least one of the intake throttle valve 19 and the fuel supply system 72 so that an air/fuel-ratio in the at least one combustion chamber 70 is such that the temperature of exhaust gas is above a limit temperature that is so high that the exhaust gas contains NO₂ up to such a concentration that regeneration of the particulate filter 38 takes place. The air/fuel-ratio may be influenced by controlling the intake throttle valve 19 and/or by controlling the fuel supply system 72. The fuel supply system 72 may include at least one fuel injector 74 for injecting fuel in an associated one of the at least one combustion chamber 70. The controller 42 may be configured to control the amount of fuel and the fuel injection timing of the at least one fuel injector 74 so that the temperature of exhaust gas is above a limit temperature that is so high that the exhaust gas contains NO₂ up to such a concentration that regeneration of the particulate filter may take place. An air/fuel mixture that contains relatively much fuel, i.e. a rich air/fuel mixture, may increase exhaust gas temperature. The exhaust gas temperature may also be increased by post injection, which involves injecting additional fuel into the combustion chambers after the combustion has taken place, which may result in the additional fuel being burned in the exhaust system, thereby elevating the temperature of the exhaust gases in the system.

In an embodiment the controller 42 may be configured to keep the temperature of the exhaust gas above approximately 260 °C when regenerating the particulate filter 38.

In an embodiment the controller 42 may be configured to keep the mass flow ratio of N02/particulate matter above approximately 25/1 during regeneration.

The various embodiments described above may be combined with each other or may be applied separate from each other.

### Industrial Applicability

The internal combustion engine assembly may be applied in any application in which a mechanical force is needed, for example, for driving a machine. The machine may be of any type including, for example, a work machine, a vehicle, a pump, an electric generator and a screw of a ship.

Especially in circumstances that an internal combustion engine is running at partial load and/or at low speed, the exhaust gas temperature may be low. At a low exhaust gas temperature, the soot level in the particulate trap 38 may increase. When the normal operation conditions during the work cycle of the engine are such that, normally, the exhaust gas temperature is low, the contemplated embodiment may take corrective measures. The corrective measures may be directed at regenerating the particulate trap 38. The corrective measure may include controlling at least one of an engine load influencing parameter and an engine speed influencing parameter to bring the temperature of exhaust gas above a limit temperature that is so high that the exhaust gas contains NO₂ up to such a concentration that regeneration of the particulate filter takes place.

When the temperatures are low, the corrective measures do not always have to be taken. In one embodiment the control of at least one of an engine load influencing parameter and an engine speed influencing parameter to bring a temperature of exhaust gas above a limit temperature that is so high that the exhaust gas contains NO₂ up to such a concentration that regeneration of the particulate filter may take place responsive to a soot loading parameter of the particulate filter having a value that is above a soot loading margin value. Such an embodiment may have limited fuel consumption.

As stated before, the soot loading parameter value may be obtained directly by means of the soot loading sensor 52 or indirectly, for example, by measuring entrance and exit pressure of the after-treatment assembly 33 or a pressure difference over the after-treatment assembly 33. As described above, other signals may be used as well for indirectly determining a soot loading parameter value.

In one embodiment a speed torque model may be used that may provide speed and torque combinations and exhaust temperatures associated with the speed and torque combinations. The use may involve selecting a speed and torque combination that may provide an exhaust gas temperature above the exhaust gas limit temperature. For example, the load to be driven by the engine would normally lead to exhaust gas temperatures that may be so low that the soot level in the particulate trap 38 may increase. When it is determined by using the speed torque map that such circumstances may occur, the load or the speed of the engine may be increased. In an embodiment, the auxiliary equipment may be used to increase the load of the engine for bringing a temperature of exhaust gas above a limit temperature that is so high that the exhaust gas contains NO₂ up to such a concentration that regeneration of the particulate filter may take place. For example, a cooling water pump, an air conditioner, a hydraulic pump, an electric generator, a fan, a heating system, a compressor, and lights may be switched on for the purpose of regenerating the particulate filter 38.

In one embodiment at least one of the load influencing parameter and speed influencing parameter may be controlled responsive to receiving a signal or a signal trend indicative of the soot loading likely progressing within a certain time period toward and above a soot loading margin value.

In one embodiment a soot loading model may be used that predicts a future soot loading parameter value in the particulate filter based on at least one input signal. The soot loading model may determine that, within a certain time limit value, a soot loading parameter value can be expected that is above a soot loading margin value. When that has been determined, the controller 42 may control at least one of the load influencing parameters and speed influencing parameter so as to increase the exhaust gas temperature above the limit temperature where regeneration may take place. When the soot loading model determined that the soot loading margin value will not yet be reached within a certain time limit, the corrective measures for increasing the exhaust gas temperature may be refrained from. Such an embodiment may have limited fuel consumption.

In an embodiment the method may include providing at least one minimum temperature profile parameter value that is indicative of an acceptable minimum temperature profile history over a first time period. The method may also include determining at least one actual temperature profile parameter value that is indicative of an actual exhaust temperature profile history over a second time period. The at least one minimum temperature profile parameter value may be compared with the at least one actual profile parameter value. Responsive to the comparing at least one of an engine load influencing parameter and an engine speed influencing parameter may be controlled to bring a temperature of exhaust gas above a limit temperature that is so high that the exhaust gas contains NO₂ up to such a concentration that regeneration of the particulate filter takes place. When the comparing indicates that regeneration may not be necessary, the corrective control measure for bringing the exhaust gas temperature above the limit temperature may be refrained from. Such an embodiment may have limited fuel consumption.

In one embodiment the at least one of an engine load influencing parameter and an engine speed influencing parameter may be controlled so that the temperature of exhaust gas may be just above a limit temperature that is so high that the exhaust gas contains NO₂ up to such a concentration that regeneration of the particulate filter may take place. Because in such an embodiment the temperature is just above the limit temperature or balance point temperature above which regeneration starts, the amount of fuel consumption may be small.

The embodiment of the speed torque map shown in Fig. 2 shows three ranges. A first range 82 may be above the thermal management boundary curve 78. When the normal operation of the engine assembly is in that range 82, the exhaust gas temperature may be high enough for in cycle regeneration of the particulate filter 38 without special corrective measures. A second range 84 may be right of the vertical margin line 80 and below the thermal management boundary curve 78. In that range 84 the exhaust gas temperature may be too low and corrective measures for raising the exhaust gas temperature may be taken. Those corrective measures may include changing the air/fuel ratio and changing the timing of the injection of the fuel. Because the engine speed is relatively high, those measures may be enough to obtain an exhaust gas temperature above the limit temperature. A third range 86 may be left of the vertical margin line 80 and below the thermal management boundary curve 78. In that range 86, the corrective measures for raising the exhaust gas temperature may, instead of or in addition to changing the air/fuel-ratio and changing the fuel injection timing include additional measures such as controlling a load influencing parameter including, for example, controlling the position of the back pressure valve 34 and or putting into use additional auxiliary equipment 68. The corrective measures for raising the exhaust gas temperature may also include raising the engine speed.

It will be apparent to those having ordinary skill in the art that various modifications and variations can be made to the particulate filter regeneration system as disclosed herein. Other embodiments will be apparent to those having ordinary skill in the art from consideration of the specification. It is intended that the specification and examples are considered as exemplary only. Other aspects, features and advantages will be apparent upon an examination of the attached drawings and appended claims.

## Claims

1. An internal combustion engine assembly comprising:
- an internal combustion engine (10);
- an exhaust system (20, 21, 22, 32, 33, 36, 38, 40) including an oxidation catalyst (36) and a particulate filter (38);
- an electronic controller (42) being configured to control at least one of an engine load influencing parameter and an engine speed influencing parameter to bring a temperature of exhaust gas above a limit temperature that is so high that the exhaust gas contains NO₂ up to such a concentration that regeneration of the particulate filter (38) takes place, **characterized in that**:
- the exhaust system includes a back pressure valve (34);
- the at least one of an engine load influencing parameter and engine speed influencing parameter at least includes the position of the back pressure valve (34) which is a load influencing parameter; and **in that**:
- when the normal work cycle of the engine (10) would result in exhaust gas temperatures that are below a limit temperature, the electronic controller (42) is configured to take corrective measures by controlling at least the position of the back pressure valve (34) and use that position as one of the engine load influencing parameters so that the temperature of the exhaust gas exceeds the limit temperature and regeneration of the particulate filter (38) is obtained during a normal work cycle of the engine (10), i.e. without interrupting the work cycle of the engine (10).

2. The internal combustion engine assembly according to claim 1, the controller (42) being configured to responsively control at least one of an engine load influencing parameter and an engine speed influencing parameter to bring a temperature of exhaust gas above a limit temperature that is so high that the exhaust gas contains NO₂ up to such a concentration that regeneration of the particulate filter takes place, wherein the controller (42) is configured to base the controlling at least in part on a soot loading parameter of the particulate filter having a value that is above a soot loading margin value.

3. The internal combustion engine assembly according to any of the preceding claims, wherein the particulate filter (38) has a soot loading sensor (52), the soot loading sensor being connected to the electronic controller (42) to provide a signal to the controller (42), the electronic controller (42) being configured for determining a soot loading parameter from the signal and to control the at least one of an engine load influencing parameter and an engine speed influencing parameter to bring the exhaust gas temperature above the limit temperature when the soot loading parameter has a value that is above a soot loading margin value.

4. The internal combustion engine assembly according to any of the preceding claims, wherein the controller (42) is responsive to a speed torque model to select a speed and torque combination that results in an exhaust gas temperature above the exhaust gas limit temperature.

5. The internal combustion engine assembly according to claim 4, wherein the speed torque model includes a speed torque map including optimal speed and torque ranges corresponding to speed and torque combinations that provide exhaust gas temperatures above the limit temperature and non-optimal speed and torque ranges corresponding to speed and torque combinations that provide exhaust gas temperatures below the limit temperature.

6. The internal combustion engine assembly according to any of the preceding claims, including auxiliary equipment (68), wherein one of the engine load influencing parameters and the engine speed influencing parameters to bring a temperature of the exhaust gas above a limit temperature that is so high that the exhaust gas contains NO₂ up to such a concentration that regeneration of the particulate filter (38) takes place is a use of the auxiliary equipment (68), the controller (42) being configured to increase the use of the auxiliary equipment (68) to increase the load.

7. The internal combustion engine assembly according to claim 6, wherein the auxiliary equipment (68) used for increasing the load is chosen from a group including:
- a water pump;
- an air conditioner;
- a hydraulic pump;
- an electric generator;
- a fan;
- a heating system;
- a compressor;
- lights.

8. The internal combustion engine assembly according to any of the preceding claims, wherein the controller (42) includes a soot loading control function, that is configured to control a soot loading parameter value in the particulate filter (38) responsive to at least one input signal, the controller (42) being configured to control at least one of the load influencing parameters and speed influencing parameter when the at least one input signal is indicative that the soot loading level, within a certain time limit value, is likely to trend toward and above a soot loading margin value.

9. The internal combustion engine assembly according to claim 8, wherein the at least one input signal is indicative of a parameter chosen from the group including:
- engine speed;
- engine torque;
- exhaust gas temperature;
- exhaust gas pressure at an entrance of the after-treatment assembly;
- exhaust gas pressure at an exit of the after-treatment assembly;
- pressure difference over the after-treatment assembly.

10. The internal combustion engine assembly according to any of the preceding claims, the electronic (42) controller having a memory containing at least one minimum temperature profile parameter value that is indicative of an acceptable minimum temperature profile history over a first time period, the electronic controller (42) being configured to:
- determine at least one actual temperature profile parameter value that is indicative of an actual exhaust temperature profile history over a second time period;
- compare the at least one minimum temperature profile parameter value with the at least one actual profile parameter value and responsively produce a regeneration signal to control at least one of an engine load influencing parameter and an engine speed influencing parameter to bring a temperature of exhaust gas above a limit temperature that is so high that the exhaust gas contains NO₂ up to such a concentration that regeneration of the particulate filter (38) takes place.

11. The internal combustion engine assembly according to claim 10, wherein the controller (42) is configured to determine the at least one minimum temperature profile parameter value that is indicative of minimum acceptable temperature profile history as a function of at least one of an ambient pressure, an ambient temperature and a humidity.

12. The internal combustion engine assembly according to any of the preceding claims, including:
- an air intake system (12, 14, 16, 18) having an intake throttle valve (19);
- at least one combustion chamber (70);
- a fuel supply system (72) for supplying fuel to the at least one combustion chamber (70);
the controller (42) being configured for controlling at least one of the intake throttle valve (19) and the fuel supply system (72) so that an air/fuel-ratio in the at least one combustion chamber (70) is such that the temperature of exhaust gas is above a limit temperature that is so high that the exhaust gas contains NO₂ up to such a concentration that regeneration of the particulate filter takes place.

13. The internal combustion engine assembly according to claim 12, the fuel supply system (72) including at least one fuel injector (74) for injecting fuel in an associated one of the at least one combustion chamber (70), the controller (42) being configured to control the amount of fuel and the fuel injection timing of the at least one fuel injector (74) so that the temperature of exhaust gas is above a limit temperature that is so high that the exhaust gas contains NO₂ up to such a concentration that regeneration of the particulate filter takes place..

14. The internal combustion engine assembly according to any of the preceding claims, wherein the controller (42) is configured to keep the temperature of the exhaust gas above approximately 260 °C when regenerating the particulate filter.

15. The internal combustion engine assembly according to any of the preceding claims, wherein the controller (42) is configured to keep the mass flow ratio of NO₂/particulate matter above approximately 25/1 during regeneration.

16. A method for controlling an internal combustion engine assembly having an exhaust system (20, 21, 22, 32, 33, 36, 38, 40) with an oxidation catalyst (36) and a particulate filter (38), the method comprising:
- controlling at least one of an engine load influencing parameter and an engine speed influencing parameter to bring a temperature of exhaust gas above a limit temperature that is so high that the exhaust gas contains NO₂ up to such a concentration that regeneration of the particulate filter takes place, **characterized in that**:
- the exhaust system includes a back pressure valve (34);
- the at least one of an engine load influencing parameter and engine speed influencing parameter includes at least a position of the back pressure valve (34) which is a load influencing parameter; and **in that**:
- when the normal work cycle of the engine (10) would result in exhaust gas temperatures that are below a limit temperature, the electronic controller (42) takes corrective measures by controlling at least the position of the back pressure valve (34) and use that position as one of the engine load influencing parameters so that the temperature of the exhaust gas exceeds the limit temperature and regeneration of the particulate filter (38) is obtained during a normal work cycle of the engine (10), i.e. without interrupting the work cycle of the engine (10).

17. The method according to claim 16 including:
- controlling at least one of an engine load influencing parameter and an engine speed influencing parameter to bring a temperature of exhaust gas above a limit temperature that is so high that the exhaust gas contains NO₂ up to such a concentration that regeneration of the particulate filter takes place responsive to a soot loading parameter of the particulate filter having a value that is above a soot loading margin value.

18. The method according to claim 16 or 17 including:
- using a speed torque model that provides speed and torque combinations and exhaust temperatures associated with the speed and torque combinations, wherein the use involves selecting a speed and torque combination that provides an exhaust gas temperature above the exhaust gas limit temperature.

19. The method according to any of claims 16-18, the internal combustion engine assembly including auxiliary equipment (68), the method including:
- using the auxiliary equipment (68) to increase the load for bringing a temperature of exhaust gas above a limit temperature that is so high that the exhaust gas contains NO₂ up to such a concentration that regeneration of the particulate filter (38) takes place.

20. The method according to any one of claims 16-19 including:
- controlling at least one of the load influencing parameter and speed influencing parameter responsive to receiving a signal or a signal trend indicative of the soot loading likely progressing within a certain time period toward and above a soot loading margin value.

21. The method according to any one of claims 16-20, including:
- using a soot loading model that predicts a future soot loading parameter value in the particulate filter (38) based on at least one input signal; and
- controlling at least one of the load influencing parameters and speed influencing parameter when it has been determined with the soot loading model that, within a certain time limit value, a soot loading parameter value can be expected that is above a soot loading margin value.

22. The method according to any one of claims 16-21 including:
- providing at least one minimum temperature profile parameter value that is indicative of an acceptable minimum temperature profile history over a first time period;
- determining at least one actual temperature profile parameter value that is indicative of an actual exhaust temperature profile history over a second time period;
- comparing the at least one minimum temperature profile parameter value with the at least one actual profile parameter value; and
- responsive to the comparing control at least one of an engine load influencing parameter and an engine speed influencing parameter to bring a temperature of exhaust gas above a limit temperature that is so high that the exhaust gas contains NO₂ up to such a concentration that regeneration of the particulate filter takes place.

23. The method according to any one of claims 16-22, including:
- controlling at least one of an engine load influencing parameter and an engine speed influencing parameter to bring a temperature of exhaust gas just above a limit temperature that is so high that the exhaust gas contains NO₂ up to such a concentration that regeneration of the particulate filter takes place.

## Patentansprüche

1. Verbrennungsmotoranordnung, umfassend:
- einen Verbrennungsmotor (10);
- ein Abgassystem (20, 21, 22, 32, 33, 36, 38, 40) mit einem Oxidationskatalysator (36) und einem Partikelfilter (38);
- eine elektronische Steuerung (42), konfiguriert zum Steuern von mindestens von beiden Parametern, eines die Motorbelastung beeinflussenden Parameters und eines die Motordrehzahl beeinflussenden Parameters, um eine Abgastemperatur über eine Grenztemperatur zu bringen, die so hoch ist, dass das Abgas NO₂ bis zu einer Konzentration enthält, dass eine Regenerierung des Partikelfilters (38) erfolgt, **dadurch gekennzeichnet, dass**:
- das Abgassystem ein Rückschlagventil (34) umfasst;
- der mindestens eine eines die Motorbelastung beeinflussenden Parameters und die Motordrehzahl beeinflussenden Parameters mindestens die Position des Rückschlagventils (34) umfasst, was ein die Belastung beeinflussender Parameter ist; und **dadurch gekennzeichnet, dass**:
- wenn der normale Arbeitszyklus des Motors (10) in Abgastemperaturen resultieren würde, die unter einer Grenztemperatur sind, die elektronische Steuerung (42) konfiguriert ist, um durch Steuerung von mindestens der Position des Rückschlagventils (34) Korrekturmaßnahmen zu ergreifen und diese Position als einen der die Motorbelastung beeinflussenden Parameter zu verwenden, sodass die Temperatur des Abgases die Grenztemperatur überschreitet und die Regenerierung des Partikelfilters (38) während eines normalen Arbeitszyklus des Motors (10) erreicht wird, d. h. ohne Unterbrechung des Arbeitszyklus des Motors (10).

2. Verbrennungsmotoranordnung nach Anspruch 1, wobei die Steuerung (42) entsprechend konfiguriert ist, um als Reaktion mindestens einen von beiden Parametern eines eine Motorbelastung beeinflussenden Parameters und eines eine Motordrehzahl beeinflussenden Parameters zu steuern, um eine Abgastemperatur über eine Grenztemperatur zu bringen, die so hoch ist, dass das Abgas NO₂ bis zu einer Konzentration enthält, dass eine Regenerierung des Partikelfilters erfolgt, wobei die Steuerung (42) entsprechend so konfiguriert ist, dass die Steuerung mindestens teilweise auf einem Rußbelastungsparameter des Partikelfilters mit einem Wert über einem Rußbelastungsrandwert basiert wird.

3. Verbrennungsmotoranordnung nach einem der vorhergehenden Ansprüche, wobei der Partikelfilter (38) einen Rußbelastungssensor (52) aufweist, der mit der elektronischen Steuerung (42) verbunden ist, um ein Signal für die Steuerung (42) bereitzustellen, wobei die elektronische Steuerung (42) entsprechend konfiguriert ist, um anhand des Signals einen Rußbelastungsparameter zu ermitteln und mindestens einen von beiden Parametern eines die Motorbelastung beeinflussenden Parameters und eines die Motordrehzahl beeinflussenden Parameters zu steuern, um die Abgastemperatur über die Grenztemperatur zu bringen, wenn der Rußbelastungsparameter einen Wert hat, der über einem Rußbelastungsrandwert ist.

4. Verbrennungsmotoranordnung nach einem der vorhergehenden Ansprüche, wobei die Steuerung (42) auf ein Drehmomentmodell reagiert, um eine Drehzahl- und Drehmomentkombination auszuwählen, die in einer Abgastemperatur über der Abgasgrenztemperatur resultiert.

5. Verbrennungsmotoranordnung nach Anspruch 4, wobei das Drehzahl-Drehmoment-Modell ein Drehzahl-Drehmoment-Kennfeld umfasst, einschließlich optimaler Drehzahl- und Drehmomentbereiche entsprechend Drehzahl- und Drehmomentkombinationen, welche die Abgastemperaturen über der Grenzwerttemperatur bereitstellen und nicht optimale Drehzahl- und Drehmomentbereiche entsprechend Drehzahl- und Drehmomentkombinationen, die Abgastemperaturen unter der Grenztemperatur bereitstellen.

6. Verbrennungsmotoranordnung nach einem der vorhergehenden Ansprüche, einschließlich Hilfsausrüstung (68), wobei einer der die Motorbelastung beeinflussenden Parameter und die Motordrehzahl beeinflussenden Parameter, der entsprechend konzipiert ist, um eine Temperatur des Abgases über eine Grenztemperatur zu bringen, die so hoch ist, dass das Abgas NO₂ bis zu einer solchen Konzentration enthält, dass die Regenerierung des Partikelfilters (38) erfolgt, eine Verwendung der Hilfsausrüstung (68) ist, wobei die Steuerung (42) konfiguriert ist, um die Verwendung der Hilfsausrüstung (68) zur Erhöhung der Belastung zu erhöhen.

7. Verbrennungsmotoranordnung nach Anspruch 6, wobei die zur Erhöhung der Belastung verwendete Hilfsausrüstung (68) aus einer Gruppe ausgewählt ist, bestehend aus:
- einer Wasserpumpe;
- einem Klimagerät;
- einer Hydraulikpumpe;
- einer Lichtmaschine;
- einem Lüfter;
- einem Heizsystem;
- einem Kompressor;
- Leuchten.

8. Verbrennungsmotoranordnung nach einem der vorhergehenden Ansprüche, wobei die Steuerung (42) eine Rußbelastungssteuerfunktion umfasst, die entsprechend konfiguriert ist, um einen Rußbelastungsparameterwert im Partikelfilter (38) in Reaktion auf mindestens ein Eingangssignal zu steuern, wobei die Steuerung (42) entsprechend konfiguriert ist, um mindestens einen der die Belastung beeinflussenden Parameter und Drehzahl beeinflussenden Parameter zu steuern, wenn das mindestens eine Eingangssignal anzeigt, dass das Rußbelastungsniveau, innerhalb eines bestimmten Zeitgrenzwerts, wahrscheinlich zu einem und über einen Rußbelastungsrandwert tendiert.

9. Verbrennungsmotoranordnung nach Anspruch 8, wobei das mindestens eine Eingangssignal indikativ für einen Parameter ist, ausgewählt aus der Gruppe, bestehend aus:
- Motordrehzahl;
- Motordrehmoment;
- Abgastemperatur;
- Abgasdruck an einem Eingang der Nachbehandlungsanordnung;
- Abgasdruck an einem Ausgang der Nachbehandlungsanordnung;
- Druckdifferenz über die Nachbehandlungsanordnung.

10. Verbrennungsmotoranordnung nach einem der vorhergehenden Ansprüche, wobei die elektronische Steuerung (42) einen Arbeitsspeicher umfasst, der mindestens einen Mindesttemperaturprofilparameterwert enthält, welcher indikativ für eine akzeptable Mindesttemperaturprofilhistorie über einen ersten Zeitraum ist, wobei die elektronische Steuerung (42) entsprechend konfiguriert ist, um:
- mindestens einen Ist-Temperaturprofilparameterwert zu bestimmen, der indikativ für eine Ist-Abgastemperaturprofilhistorie über einen zweiten Zeitraum ist;
- den mindestens einen Mindesttemperaturprofilparameterwert mit dem mindestens einen Ist-Profilparameterwert zu vergleichen und reagierend ein Regenerierungssignal zu erzeugen, um mindestens einen von beiden Parametern eines die Motorbelastung beeinflussenden Parameters und eines die Motordrehzahl beeinflussenden Parameters zu steuern, um eine Abgastemperatur über eine Grenztemperatur zu bringen, die so hoch ist, dass das Abgas NO₂ bis zu einer solchen Konzentration enthält, dass die Regenerierung des Partikelfilters (38) erfolgt.

11. Verbrennungsmotoranordnung nach Anspruch 10, wobei die Steuerung (42) konfiguriert ist, um den mindestens einen Mindesttemperaturprofilparameterwert zu ermitteln, der anzeigend für die minimal akzeptable Temperaturprofilhistorie als eine Funktion von mindestens einem eines Umgebungsdrucks, einer Umgebungstemperatur und einer Luftfeuchtigkeit ist.

12. Verbrennungsmotoranordnung nach einem der vorhergehenden Ansprüche, umfassend:
- ein Luftansaugsystem (12, 14, 16, 18) mit einem Ansaugdrosselventil (19);
- mindestens eine Verbrennungskammer (70);
- ein Kraftstoffversorgungssystem (72), um der mindestens einen Verbrennungskammer (70) Kraftstoff zuzuführen;
wobei die Steuerung (42) entsprechend konfiguriert ist, um mindestens eines der beiden, dem Ansaugdrosselventil (19) und Kraftstoffversorgungssystem (72), so zu steuern, dass ein Luft/KraftstoffVerhältnis in der mindestens einen Verbrennungskammer (70) so ist, dass die Abgastemperatur über einer Grenztemperatur liegt, die so hoch ist, dass das Abgas NO₂ bis zu einer solchen Konzentration enthält, dass die Regenerierung des Partikelfilters erfolgt.

13. Verbrennungsmotoranordnung nach Anspruch 12, wobei das Kraftstoffversorgungssystem (72) mindestens eine Kraftstoffeinspritzdüse (74) zum Einspritzen von Kraftstoff in eine dazugehörige mindestens eine Verbrennungskammer (70) umfasst, wobei die Steuerung (42) entsprechend konfiguriert ist, um die Menge des Kraftstoffs und das Kraftstoffeinspritztiming der mindestens einen Kraftstoffeinspritzdüse (74) so zu steuern, dass die Abgastemperatur über einer Grenztemperatur ist, die so hoch ist, dass das Abgas NO₂ bis zu einer solchen Konzentration enthält, dass die Regenerierung des Partikelfilters erfolgt.

14. Verbrennungsmotoranordnung nach einem der vorhergehenden Ansprüche, wobei die Steuerung (42) konfiguriert ist, um die Abgastemperatur beim Regenerieren des Partikelfilters über ungefähr 260° zu halten.

15. Verbrennungsmotoranordnung nach einem der vorhergehenden Ansprüche, wobei die Steuerung (42) entsprechend konfiguriert ist, um das Masseflussverhältnis von NO₂/Partikelmaterie während der Regenerierung über ungefähr 25/1 zu halten.

16. Verfahren zum Steuern einer Verbrennungsmotoranordnung mit einem Abgassystem (20, 21, 22, 32, 33, 36, 38, 40) mit einem Oxidationskatalysator (36) und einem Partikelfilter (38), das Verfahren umfassend:
- das Steuern von mindestens einem der beiden Parameter die Motorbelastung beeinflussenden Parameters und eines die Motordrehzahl beeinflussenden Parameters, um eine Abgastemperatur über eine Grenztemperatur zu bringen, die so hoch ist, dass das Abgas NO₂ bis zu einer solchen Konzentration enthält, dass die Regenerierung des Partikelfilters erfolgt, **dadurch gekennzeichnet, dass**:
- das Abgassystem ein Rückschlagventil (34) umfasst;
- der mindestens eine von beiden Parametern des die Motorbelastung beeinflussenden Parameters und die Motordrehzahl beeinflussenden Parameters, mindestens eine Position des Rückschlagventils (34) umfasst, die ein die Belastung beeinflussender Parameter ist; und dadurch dass:
- wenn der normale Arbeitszyklus des Motors (10) in Abgastemperaturen resultieren würde, die unter einer Grenztemperatur liegen, die elektronische Steuerung (42) Korrekturmaßnahmen ergreift durch Steuerung von mindestens der Position des Rückschlagventils (34) und Verwendung dieser Position als einen der die Motorbelastung beeinflussenden Parameter, sodass die Temperatur des Abgases die Grenztemperatur überschreitet und die Regenerierung des Partikelfilters (38) während eines normalen Arbeitszyklus des Motors (10) erreicht wird, d. h. ohne Unterbrechung des Arbeitszyklus des Motors (10).

17. Verfahren nach Anspruch 16, umfassend:
- das Steuern von mindestens der beiden Parameter, des die Motorbelastung beeinflussenden Parameters und des die Motordrehzahl beeinflussenden Parameters, um eine Abgastemperatur über einen Grenzwert zu bringen, der so hoch ist, dass das Abgas NO₂ bis zu einer solchen Konzentration enthält, dass die Regenerierung des Partikelfilters erfolgt, reagierend auf einen Rußbelastungsparameter des Partikelfilters mit einem Wert, der über einem Rußbelastungsrandwert ist.

18. Verfahren nach Anspruch 16 oder 17, umfassend:
- die Verwendung eines Drehzahl-Drehmoment-Modells, das Drehzahl- und Drehmomentkombinationen und Abgastemperaturen, assoziiert mit den Drehzahl- und Drehmomentkombinationen, bereitstellt, wobei die Verwendung die Auswahl einer Drehzahl- und Drehmomentkombination beinhaltet, die eine Abgastemperatur über der Abgasgrenztemperatur bereitstellt.

19. Verfahren nach einem der Ansprüche 16-18, wobei die Verbrennungsmotoranordnung Hilfsausrüstung (68) umfasst, das Verfahren umfassend:
- die Verwendung der Hilfsausrüstung (68), um die Belastung zu erhöhen, um eine Temperatur eines Abgases über eine Grenztemperatur zu bringen, die so hoch ist, dass das Abgas NO₂ bis zu einer solchen Konzentration enthält, dass die Regenerierung des Partikelfilters (38) erfolgt.

20. Verfahren nach einem der Ansprüche 16-19, umfassend:
- das Steuern von mindestens einem von beiden Parametern eines die Belastung beeinflussenden Parameters und einer die Drehzahl beeinflussenden Parameters, in Reaktion auf das Empfangen eines Signals oder einer Signaltendenz, anzeigend dafür, dass die Rußbelastung innerhalb eines gewissen Zeitraums wahrscheinlich zu einem oder über einen Rußbelastungsrandwert fortschreitet.

21. Verfahren nach einem der Ansprüche 16-20, umfassend:
- die Verwendung eines Rußbelastungsmodells, das einen zukünftigen Rußbelastungsparameterwert in dem Partikelfilter (38) basierend auf mindestens einem Eingangssignal prognostiziert; und
- das Steuern von mindestens einem von beiden Parametern des die Belastung beeinflussenden Parameters und des die Drehzahl beeinflussenden Parameters, wenn anhand des Rußbelastungsmodells ermittelt wurde, dass innerhalb eines bestimmten Zeitgrenzwerts ein Rußbelastungsparameterwert erwartet werden kann, der über einem Rußbelastungsrandwert ist.

22. Verfahren nach einem der Ansprüche 16-21, umfassend:
- das Bereitstellen von mindestens einem Mindesttemperaturprofilparameterwert, der anzeigend für eine akzeptable Mindesttemperaturprofilhistorie über einen ersten Zeitraum ist;
- das Bestimmen von mindestens einem Ist-Temperaturprofilparameterwert, der anzeigend für eine Ist-Abgastemperaturprofilhistorie über einen zweiten Zeitraum ist;
- das Vergleichen des mindestens einen Mindesttemperaturprofilparameterwerts mit dem mindestens einen Ist-Profilparameterwert; und
- in Reaktion auf den Vergleich, das Steuern von mindestens von beiden Parametern eines eine Motorbelastung beeinflussenden Parameters und eines eine Motordrehzahl beeinflussenden Parameters, um eine Abgastemperatur über eine Grenztemperatur zu bringen, die so hoch ist, dass das Abgas NO₂ bis zu einer solchen Konzentration enthält, dass die Regenerierung des Partikelfilters erfolgt.

23. Verfahren nach einem der Ansprüche 16-22, umfassend:
- das Steuern von mindestens einem von beiden Parametern eines eine Motorbelastung beeinflussenden Parameters und eines eine Motordrehzahl beeinflussenden Parameter, um eine Abgastemperatur gerade über eine Grenztemperatur zu bringen, die so hoch ist, dass das Abgas NO₂ bis zu einer solchen Konzentration enthält, dass die Regenerierung des Partikelfilters erfolgt.

## Revendications

1. Ensemble de moteur à combustion interne comprenant :
- un moteur à combustion interne (10) ;
- un système d'échappement (20, 21, 22, 32, 33, 36, 38, 40) comprenant un catalyseur à oxydation (36) et un filtre à particules (38) ;
- un contrôleur électronique (42) configuré pour commander au moins un paramètre parmi un paramètre influant sur la charge du moteur et un paramètre influant sur le régime du moteur pour amener une température de gaz d'échappement au-dessus d'une température limite qui est si élevée que les gaz d'échappement contiennent du NO₂ jusqu'à une concentration telle que la régénération du filtre à particules (38) se produit, **caractérisé en ce que** :
- le système d'échappement comprend une soupape de contre-pression (34) ;
- ledit au moins un paramètre parmi un paramètre influant sur la charge du moteur et un paramètre influant sur le régime du moteur comprend au moins la position de la soupape de contre-pression (34) qui est un paramètre influant sur la charge ; et **en ce que** :
- quand le cycle de travail normal du moteur (10) doit donner des températures de gaz d'échappement qui sont inférieures à une température limite, le contrôleur électronique (42) est configuré pour prendre des mesures correctives en commandant au moins la position de la soupape de contre-pression (34) et utiliser cette position comme un des paramètres influant sur la charge du moteur de telle sorte que la température des gaz d'échappement dépasse la température limite et que la régénération du filtre à particules (38) est obtenue pendant un cycle de travail normal du moteur (10), c'est-à-dire sans interrompre le cycle de travail du moteur (10).

2. Ensemble de moteur à combustion interne selon la revendication 1, dans lequel le contrôleur (42) est configuré pour commander de manière adaptative au moins un paramètre parmi un paramètre influant sur la charge du moteur et un paramètre influant sur le régime du moteur pour amener une température de gaz d'échappement au-dessus d'une température limite qui est si élevée que les gaz d'échappement contiennent du NO₂ jusqu'à une concentration telle que la régénération du filtre à particules se produit, le contrôleur (42) étant configuré pour réaliser la commande en se basant au moins en partie sur un paramètre de charge de suie du filtre à particules ayant une valeur qui est supérieure à une valeur de marge de charge de suie.

3. Ensemble de moteur à combustion interne selon l'une quelconque des revendications précédentes, dans lequel le filtre à particules (38) comporte un capteur de charge de suie (52), le capteur de charge de suie étant connecté au contrôleur électronique (42) pour fournir un signal au contrôleur (42), le contrôleur électronique (42) étant configuré pour déterminer un paramètre de charge de suie à partir du signal et pour commander ledit au moins un paramètre parmi un paramètre influant sur la charge du moteur et un paramètre influant sur le régime du moteur pour amener la température des gaz d'échappement au-dessus de la température limite quand le paramètre de charge de suie a une valeur qui est supérieure à une valeur de marge de charge de suie.

4. Ensemble de moteur à combustion interne selon l'une quelconque des revendications précédentes, dans lequel le contrôleur (42) réagit à un modèle de vitesse et couple pour sélectionner une combinaison de vitesse et de couple qui donne une température de gaz d'échappement supérieure à la température limite des gaz d'échappement.

5. Ensemble de moteur à combustion interne selon la revendication 4, dans lequel le modèle de vitesse et couple comprend une cartographie de vitesse et de couple comportant des plages de vitesse et de couple optimales qui correspondent à des combinaisons de vitesse et de couple qui donnent des températures de gaz d'échappement supérieures à la température limite et des plages de vitesse et de couple non optimales qui correspondent à des combinaisons de vitesse et de couple qui donnent des températures de gaz d'échappement inférieures à la température limite.

6. Ensemble de moteur à combustion interne selon l'une quelconque des revendications précédentes, comprenant un équipement auxiliaire (68), dans lequel l'un des paramètres influant sur la charge du moteur et des paramètres influant sur le régime du moteur pour amener la température des gaz d'échappement au-dessus d'une température limite qui est si élevée que les gaz d'échappement contiennent du NO₂ jusqu'à une concentration telle que la régénération du filtre à particules (38) se produit est une utilisation de l'équipement auxiliaire (68), le contrôleur (42) étant configuré pour augmenter l'utilisation de l'équipement auxiliaire (68) pour augmenter la charge.

7. Ensemble de moteur à combustion interne selon la revendication 6, dans lequel l'équipement auxiliaire (68) utilisé pour augmenter la charge est choisi dans un groupe comprenant :
- une pompe à eau ;
- un système de climatisation ;
- une pompe hydraulique ;
- un générateur électrique ;
- un ventilateur ;
- un système de chauffage ;
- un compresseur ;
- des lumières.

8. Ensemble de moteur à combustion interne selon l'une quelconque des revendications précédentes, dans lequel le contrôleur (42) comprend une fonction de commande de charge de suie, qui est configurée pour commander une valeur de paramètre de charge de suie dans le filtre à particules (38) réagissant à au moins un signal d'entrée, le contrôleur (42) étant configuré pour commander au moins l'un des paramètres influant sur la charge et paramètre influant sur la vitesse quand ledit au moins un signal d'entrée indique que le niveau de charge de suie, dans une certaine valeur limite de temps, est susceptible de s'orienter vers et de dépasser une valeur de marge de charge de suie.

9. Ensemble de moteur à combustion interne selon la revendication 8, dans lequel ledit au moins un signal d'entrée représente un paramètre choisi dans le groupe comprenant :
- le régime du moteur ;
- le couple du moteur ;
- la température des gaz d'échappement ;
- la pression des gaz d'échappement en entrée de l'ensemble de post-traitement ;
- la pression des gaz d'échappement en sortie de l'ensemble de post-traitement ;
- la différence de pression sur l'ensemble de post-traitement.

10. Ensemble de moteur à combustion interne selon l'une quelconque des revendications précédentes, dans lequel le contrôleur électronique (42) a une mémoire qui contient au moins une valeur de paramètre de profil de température minimum représentant un historique de profil de température minimum acceptable sur un premier intervalle de temps, le contrôleur électronique (42) étant configuré pour :
- déterminer au moins une valeur de paramètre de profil de température réelle qui représente un historique de profil de température d'échappement réel sur un deuxième intervalle de temps ;
- comparer ladite au moins une valeur de paramètre de profil de température minimum avec ladite au moins une valeur de paramètre de profil réel et produire de manière adaptative un signal de régénération pour commander au moins un paramètre parmi un paramètre influant sur la charge du moteur et un paramètre influant sur le régime du moteur pour amener une température des gaz d'échappement au-dessus d'une température limite qui est si élevée que les gaz d'échappement contiennent du NO₂ jusqu'à une concentration telle que la régénération du filtre à particules (38) se produit.

11. Ensemble de moteur à combustion interne selon la revendication 10, dans lequel le contrôleur (42) est configuré pour déterminer ladite au moins une valeur de paramètre de profil de température minimum qui représente un historique de profil de température acceptable minimum en fonction d'au moins un paramètre parmi une pression ambiante, une température ambiante et une humidité.

12. Ensemble de moteur à combustion interne selon l'une quelconque des revendications précédentes, comprenant :
- un système d'admission d'air (12, 14, 16, 18) comportant un papillon d'admission (19) ;
- au moins une chambre de combustion (70) ;
- un système d'alimentation en carburant (72) pour introduire du carburant dans ladite au moins une chambre de combustion (70) ;
le contrôleur (42) étant configuré pour commander au moins un élément parmi le papillon d'admission (19) et le système d'alimentation en carburant (72) de sorte qu'un rapport air-carburant dans ladite au moins une chambre de combustion (70) est tel que la température des gaz d'échappement est supérieure à une température limite qui est si élevée que les gaz d'échappement contiennent du NO₂ jusqu'à une concentration telle que la régénération du filtre à particules se produit.

13. Ensemble de moteur à combustion interne selon la revendication 12, dans lequel le système d'alimentation en carburant (72) comprend au moins un injecteur de carburant (74) pour injecter du carburant dans une chambre associée parmi lesdites au moins une chambre de combustion (70), le contrôleur (42) étant configuré pour commander la quantité de carburant et le calage de l'injection de carburant dudit au moins un injecteur de carburant (74) de telle manière que la température des gaz d'échappement est supérieure à une température limite qui est si élevée que les gaz d'échappement contiennent du NO₂ jusqu'à une concentration telle que la régénération du filtre à particules se produit.

14. Ensemble de moteur à combustion interne selon l'une quelconque des revendications précédentes, dans lequel le contrôleur (42) est configuré pour maintenir la température des gaz d'échappement au-dessus d'environ 260 °C lors de la régénération du filtre à particules.

15. Ensemble de moteur à combustion interne selon l'une quelconque des revendications précédentes, dans lequel le contrôleur (42) est configuré pour maintenir le rapport de débit massique NO₂/particules au-dessus d'environ 25/l pendant la régénération.

16. Procédé de commande d'un ensemble de moteur à combustion interne comportant un système d'échappement (20, 21, 22, 32, 33, 36, 38, 40) comprenant un catalyseur à oxydation (36) et un filtre à particules (38), le procédé comprenant l'opération suivante :
- commander au moins un paramètre parmi un paramètre influant sur la charge du moteur et un paramètre influant sur le régime du moteur pour amener une température de gaz d'échappement au-dessus d'une température limite qui est si élevée que les gaz d'échappement contiennent du NO₂ jusqu'à une concentration telle que la régénération du filtre à particules se produit, **caractérisé en ce que** :
- le système d'échappement comprend une soupape de contre-pression (34) ;
- ledit au moins un paramètre parmi un paramètre influant sur la charge du moteur et un paramètre influant sur le régime du moteur comprend au moins une position de la soupape de contre-pression (34) qui est un paramètre influant sur la charge ; et **en ce que** :
- quand le cycle de travail normal du moteur (10) doit donner des températures de gaz d'échappement qui sont inférieures à une température limite, le contrôleur électronique (42) prend des mesures correctives en commandant au moins la position de la soupape de contre-pression (34) et utilise cette position comme un des paramètres influant sur la charge du moteur de telle sorte que la température des gaz d'échappement dépasse la température limite et que la régénération du filtre à particules (38) est obtenue pendant un cycle de travail normal du moteur (10), c'est-à-dire sans interrompre le cycle de travail du moteur (10).

17. Procédé selon la revendication 16, comprenant l'opération suivante :
- commander au moins un paramètre parmi un paramètre influant sur la charge du moteur et un paramètre influant sur le régime du moteur pour amener une température de gaz d'échappement au-dessus d'une température limite qui est si élevée que les gaz d'échappement contiennent du NO₂ jusqu'à une concentration telle que la régénération du filtre à particules se produit en réponse à un paramètre de charge de suie du filtre à particules ayant une valeur qui est supérieure à une valeur de marge de charge de suie.

18. Procédé selon la revendication 16 ou 17, comprenant l'opération suivante :
- utiliser un modèle de vitesse et couple qui fournit des combinaisons de vitesse et de couple et des températures d'échappement associées aux combinaisons de vitesse et de couple, cette utilisation impliquant la sélection d'une combinaison de vitesse et de couple qui donne une température de gaz d'échappement supérieure à la température limite des gaz d'échappement.

19. Procédé selon l'une quelconque des revendications 16 à 18, dans lequel l'ensemble de moteur à combustion interne comprend un équipement auxiliaire (68), le procédé comprenant l'opération suivante :
- utiliser l'équipement auxiliaire (68) pour augmenter la charge afin d'amener une température de gaz d'échappement au-dessus d'une température limite qui est si élevée que les gaz d'échappement contiennent du NO₂ jusqu'à une concentration telle que la régénération du filtre à particules (38) se produit.

20. Procédé selon l'une quelconque des revendications 16 à 19, comprenant l'opération suivante :
- commander au moins un paramètre parmi le paramètre influant sur la charge et le paramètre influant sur la vitesse réagissant à la réception d'un signal ou d'une tendance de signal qui indique que la charge de suie est susceptible, dans un certain intervalle de temps, de s'orienter vers et de dépasser une valeur de marge de charge de suie.

21. Procédé selon l'une quelconque des revendications 16 à 20, comprenant les opérations suivantes :
- utiliser un modèle de charge de suie qui prédit une future valeur de paramètre de charge de suie dans le filtre à particules (38) en se basant sur au moins un signal d'entrée ; et
- commander au moins l'un des paramètres influant sur la charge et le paramètre influant sur la vitesse quand il a été déterminé avec le modèle de charge de suie que, dans une certaine valeur limite de temps, on peut s'attendre à ce qu'une valeur de paramètre de charge de suie soit supérieure à une valeur de marge de charge de suie.

22. Procédé selon l'une quelconque des revendications 16 à 21, comprenant les opérations suivantes :
- fournir au moins une valeur de paramètre de profil de température minimum représentant un historique de profil de température minimum acceptable sur un premier intervalle de temps ;
- déterminer au moins une valeur de paramètre de profil de température réelle qui représente un historique de profil de température d'échappement réel sur un deuxième intervalle de temps ;
- comparer ladite au moins une valeur de paramètre de profil de température minimum avec ladite au moins une valeur de paramètre de profil réel ; et
- en réaction à cette comparaison, commander au moins un paramètre parmi un paramètre influant sur la charge du moteur et un paramètre influant sur le régime du moteur pour amener une température des gaz d'échappement au-dessus d'une température limite qui est si élevée que les gaz d'échappement contiennent du NO₂ jusqu'à une concentration telle que la régénération du filtre à particules se produit.

23. Procédé selon l'une quelconque des revendications 16 à 22, comprenant l'opération suivante :
- commander au moins un paramètre parmi un paramètre influant sur la charge du moteur et un paramètre influant sur le régime du moteur pour amener une température des gaz d'échappement juste au-dessus d'une température limite qui est si élevée que les gaz d'échappement contiennent du NO₂ jusqu'à une concentration telle que la régénération du filtre à particules se produit.
